# EUROPÄISCHE PATENTSCHRIFT

(11) **EP 0 801 456 B1**
(45) Veröffentlichungstag und Bekanntmachung des Hinweises auf die Patenterteilung: **02.11.2005**
(21) Anmeldenummer: 97105861.5
(22) Anmeldetag: 09.04.1997
(51) Int. Cl.: H02K 5/15

(54) **Elektromotor**
Electric motor
Moteur électrique

(30) Priorität: 10.04.1996 DE 19614218
(43) Veröffentlichungstag der Anmeldung: 15.10.1997
(73) Patentinhaber: INTERELECTRIC AG, CH-6072 Sachseln (CH)
(72) Erfinder: Neumann, Frank, 6020 Emmenbrücke (CH); Steffan, Joachim, 6074 Giswil (CH); Mayer, Jürgen, 6072 Sachseln (CH)
(74) Vertreter: Grünecker, Kinkeldey, Stockmair & Schwanhäusser Anwaltssozietät

(56) Entgegenhaltungen:
- DE-A1- 2 806 116
- DE-U1- 1 868 377
- GB-A- 2 160 370
- US-A- 3 670 405

## Beschreibung

Die Erfindung bezieht sich auf einen Elektromotor mit einem rohrförmigen Gehäuseteil gemäß dem Oberbegriff von Anspruch 1.

Ein solcher Elektromotor ist aus dem DE-GM 18 68 377 bekannt. Bei diesem liegt ein Verschlusskörper einer Schulter an einer Stirnseite der Hülse an und weist im Bereich des Übergangs von eingestecktem Bereich und Schulter mehrere Ausnehmungen auf, die von außen zugänglich sind. In die Ausnehmungen wird jeweils eine Klemmlasche an der Hülse eingeformt, so dass der Verschlusskörper verriegelt ist.

Insbesondere bei kleinen Elektromotoren ist es üblich, dass ein aus Kunststoff gefertigter Deckel im wesentlichen passgenau in das Ende eines rohrförmigen Gehäuseteils bis zu einem Anschlag eingeschoben wird, und anschließend das den Deckel kragenförmig umschließende Stirnseitenende des Gehäuseteils an bestimmten Abschnitten mittels eines Eindrückvorgangs verformt wird, wodurch auch die entsprechenden Bereiche des Deckels verformt werden. Diese Konstruktion macht es zum einen erforderlich, dass der Deckel im Innern des Gehäuseteils einen Anschlag hat; zum anderen liegen die Befestigungsstellen außen, so dass sie sämtlichen äußeren Einflüssen ausgesetzt sind. Darüber hinaus kann eine derartige Deckelbefestigung nicht mit sämtlichen Materialen durchgeführt werden, da doch eine beträchtliche Verformung im Befestigungsbereich am Deckel erfolgt. Daher ist man bestrebt, derartige Konstruktionen zu verbessern.

Es ist die Aufgabe der vorliegenden Erfindung, einen Elektromotor der eingangs genannten Art mit einer verbesserten Verbindungstechnik zwischen Deckel und Gehäuseteil bereitzustellen.

Diese Aufgabe wird erfindungsgemäß durch einen Elektromotor gemäß Anspruch 1 gelöst.

Die Erfindung bietet den Vorteil, dass der gesamte Stirnseitenbereich des Gehäuseteils von einem Flansch des Deckels schützend abgedeckt ist, der darüber hinaus noch die axiale Positionierung des Deckels übernimmt. Aus diesem Grunde müssen keine Anschlagsvorrichtungen im Innern des Gehäuseteils angeordnet sein, welches dadurch einfacher ausgestaltet sein kann. Des weiteren erfolgt die Verformung des Stirnseitenbereichs des Gehäuseteils an geschützten Stellen innerhalb des vom Außenumfang des Gehäuseteils und Flansch des Deckels umgrenzten Bereichs. Die Ausformung einer Hinterschneidung macht es darüber hinaus unnötig, Bereiche des Deckels bei einer derartigen Anordnung mitzuverformen. Aus diesem Grunde kann eine große Zahl von verschiedenen Materialen zum Ausformen des Deckels verwendet werden, da dieser an der Verformung nicht beteiligt ist. Zusätzlich sorgt das Einformen von Material der Abschnitte des Stirnseitenbereichs in die Hinterschneidung immer für eine sichere Anlage des Flansches am Stirnseitenbereich, da durch den Verformungsvorgang auch immer eine Kraftkomponente in Richtung Gehäuseteilinneres gerichtet ist.

Die Aussparungen sind als achsparallele Öffnungen im Flansch ausgebildet, die sich in den Einsteckbereich erstrecken und an dessen Außenumfang zum Aufnehmen des Stirnseitenbereichs des Gehäuses offen sind. Durch diese Ausgestaltung können mittels einfacher geometrisch aufgebaute Öffnungen sowohl die Hinterschneidung als auch die Zugriffsöffnung erzeugt werden. Darüber hinaus erstreckt sich die Hauptverformungsrichtung ebenfalls achsparallel zu den Achsen von Deckel und Gehäuseteil, wodurch mit relativ geringem Stempelaufbau die Verformung in den verschiedenen Aussparungen auch gleichzeitig ausgeführt werden können.

Da der von dem Einsteckbereich vorgegebene Querschnitt sämtliche der Befestigung des Deckels dienenden Aussparungsquerschnitte schneidet, ist automatisch die Hinterschneidung in sämtlichen Aussparungen gebildet, ohne dass große Anforderungen an deren Ausbildung, z.B. in einer Spritzgussmaschine, gestellt werden müssen.

Der Vollständigkeit halber sei erwähnt, dass es nicht zwingend notwendig ist für die Erfindung, dass der Flansch des Deckels unmittelbar auf dem Stirnseitenbereich des Gehäuseteils aufliegt. Vielmehr soll die Zwischenfügung von zusätzlichen Bauteilen, wie Dichtungen oder ähnliches mit Berücksichtigung finden.

Um eine möglichst gleichmäßige Krafteinleitung beim Verformungsvorgang und eine entsprechend gleichmäßige Befestigung des Deckels zu erreichen, können mehrere Öffnungen gleichmäßig verteilt auf demselben Teilkreis um die Deckelachse angeordnet sein. Bei einer derartigen gleichmäßigen Anordnung vereinfacht sich auch die Möglichkeit die Aussparungen für eventuell andere Zwecke, wie z.B. zur Befestigung von zusätzlichen Bauteilen zu verwenden.

Vorteilhafterweise kann der von den Öffnungen aufgespannte Außendurchmesser größer sein als der Durchmesser des Einsteckbereichs und der von den Öffnungen aufgespannte Innendurchmesser kleiner sein als der Durchmesser des Einsteckbereichs. Hierdurch ist gewährleistet, dass bei einer zylindrischen Ausführung des Gehäuseteils und des Deckels der Stirnseitenbereich des Gehäuseteils immer automatisch beim Einschieben des Einsteckbereichs des Deckels nach Anlage am Flansch innerhalb der Aussparung angeordnet ist. Die Maße der Durchmesser können dann jeweils den entsprechenden Umständen und der gewünschten Festigkeit der Verbindung angepasst werden, da durch diese Vorgaben automatisch die zur Verformung zur Verfügung stehende Materialmenge vorgegeben ist.

Ein Elektromotor mit an einem Stirnseitenende aus dem Deckel hervorstehenden Kontakten, die mit entsprechenden Gegenkontakten eines im Bereich des Deckels angeordneten Gehäuseanbauteils kontaktiert sind, kann derart ausgebildet sein, dass die Kontakte am Deckel jeweils Schneid- bzw. Quetschklingen aufweisen, die in entsprechende Vertiefungen im Gehäuseanbauteil im gesteckten Zustand eingeführt sind, wobei die dem Deckel zugewandten offenen Seiten der Vertiefungen zumindest bereichsweise von den Gegenkontakten im ungesteckten Zustand überspannt sind und im gesteckten Zustand die Gegenkontakte zumindest abschnittsweise von den Schneid- oder Quetschklingen in die Vertiefungen eingeformt und dort festgeklemmt sind.

Diese Ausführungsform hat den Vorteil, dass wenn einmal der Deckel am Gehäuseteil angebracht ist, durch einfaches Aufsetzen eines Gehäuseanbauteils dieses auf schnellstmögliche Weise mit den am Deckel befindlichen Kontakten kontaktiert werden kann. Hierzu sind keine zeit- und kostenaufwendigen Lötverbindungen mehr nötig, wie sie zum Teil üblich waren. Diese Ausführungsform bietet insbesondere enorme Vorteile für die Fertigung, da am Gehäuseanbauteil keine speziellen Kontaktierungsmöglichkeiten angeordnet werden müssen, sondern lediglich auch die zur Verfügung stehenden Leitungsenden Verwendung finden können.

Um eine möglichst großflächige Kontaktierung sicherzustellen, kann das freie Ende der Gegenkontakte die Vertiefungen im eingesteckten Zustand derart mit einer Länge überspannen, dass im gesteckten Zustand das freie Ende der Gegenkontakte nach deren abschnittsweisen Einformen in die Vertiefungen weiterhin außerhalb der Vertiefungen angeordnet ist. Hierdurch ist sichergestellt, dass innerhalb der Vertiefungen die Kontakte an sämtlichen Kontaktseiten mit den Gegenkontakten in Berührung stehen.

Günstigerweise kann dabei das freie Ende der Gegenkontakte im gesteckten Zustand zwischen Deckel und Gehäuseanbauteil eingeklemmt sein. Hierdurch erfolgt eine zusätzliche Sicherung am Ende des Steckvorgangs. Darüber hinaus lässt sich das freie Ende dann auch sauber positionieren, wodurch es nicht zu fehlerhaften Kontaktübergängen kommen kann.

Eine Variante schlägt vor, dass die Gegenkontakte jeweils von einem mit einer Einformsicke im Bereich der Vertiefung vorgeformten Bandmaterial gebildet sind. Das Bandmaterial stellt dann einen entsprechend gewollten Widerstand der Einformung entgegen, so dass ein gewünschtes Festklemmen des Gehäuseanbauteils erfolgt. Es wäre in diesem Zusammenhang durchaus denkbar, dass diese Anordnung gleichzeitig als Befestigung des Gehäuseanbauteils dient.

Eine besonders einfache Variante besteht darin, dass die Gegenkontakte jeweils von verformbaren Litzen gebildet sind, wodurch sich einfach abisolierte Kabelenden auf einfache Weise als Gegenkontakte verwenden lassen.

Die Anordnung des Gehäuseanbauteils an dem Deckel kann auch über Rasteinrichtungen erfolgen, durch die ein schnelles Anbringen und Sichern der Kontaktstellen möglich ist.

Ein Verfahren zum Befestigen eines Deckels mit einem Einsteckbereich und einem Flansch in einem Gehäuseteil eines Elektromotors zeichnet sich durch die folgenden Schritte aus:
a) Einführen des Einsteckbereichs in das Gehäuseteil bis der Flansch mit an der Stirnseite des Gehäuseteils anliegt,
b) Einfahren eines Preßstempels in die Aussparung und Verformen eines Abschnittes des Stirnseitenbereichs in die Hinterschneidung der Aussparung.

Das Verfahren bietet den Vorteil, dass lediglich das Material des Gehäuseteils verformt werden muss und sich dieses entsprechend der Vorgaben der Hinterschneidung passgenau in dieser an den Deckel anlegt.

Besonders einfach lässt sich das Verfahren ausführen, wenn gemäß einer Variante der Pressstempel im wesentlichen achsparallel zur Deckel- bzw. Gehäuseteilachse in die Aussparung einfährt und den Abschnitt des Stirnseitenbereichs im wesentlichen radial in Richtung der Achse umformt. Die nach Art einer Vernietung erfolgende Verbindung zwischen Deckel und Gehäuseteil kann bei einer derartigen Verfahrensvariante auf äußerst geringem Raum erfolgen.

Im folgenden werden Ausführungsbeispiele der vorliegenden Erfindung anhand einer Zeichnung näher erläutert. Es zeigen:
- Fig. 1: eine Befestigungsstelle zwischen Deckel und Gehäuseteil in einer Schnittdarstellung,
- Fig. 2: eine Ansicht von links auf die Befestigungsstelle aus Figur 1,
- Fig. 3: die Befestigungsstelle ähnlich Figur 1 kurz vorm Verformen und Einfahren eines Pressstempels,
- Fig. 4: eine verkleinerte perspektivische Teilansicht auf einem an dem Gehäuseteil befestigten Deckel,
- Fig. 5: eine Verbindungsvariante zwischen Kontakten des Deckels und einem Gehäuseanbauteil in einer geschnittenen Teilansicht und ungestecktem Zustand,
- Fig. 6: die Bauteile gemäß Figur 5 in gestecktem Zustand,
- Fig. 7: eine weitere Verbindungsvariante zwischen aus einem Deckel hervorstehenden Kontakten und einem Gehäuseanbauteil in einer geschnittenen Teilansicht und im ungesteckten Zustand und
- Fig. 8: die Bauteile gemäß Figur 7 im gesteckten Zustand.

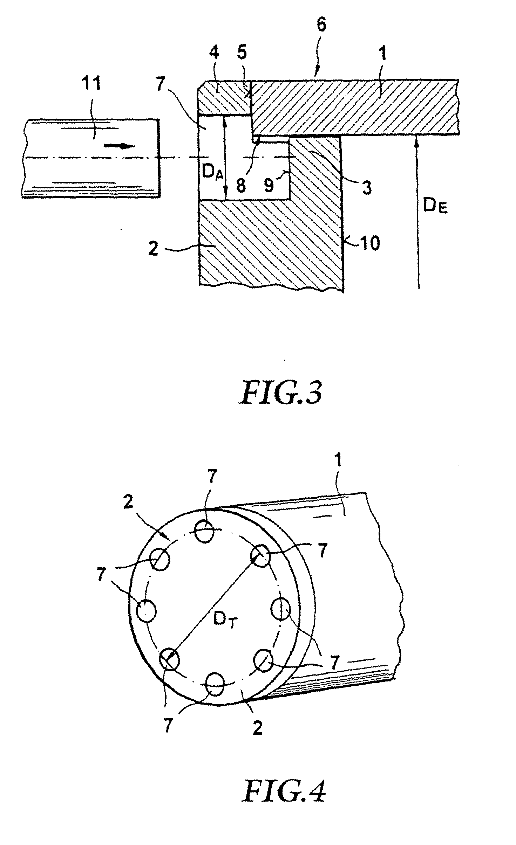

Wie insbesondere anhand der Figur 4 zu erkennen ist, umfasst der erfindungsgemäße Elektromotor insbesondere ein zylinderrohrförmiges Gehäuseteil 1 und einen zumindest an einer Seite an diesem befestigten Deckel 2. Der Deckel 2 kann entsprechend seiner gewünschten Funktion zusätzlich noch z.B. zum Durchführen der Welle zentrisch angeordnete Öffnungen bzw. an dieser Stelle ausgeformte Lagersitze und ähnliche Ausformungen aufweisen.

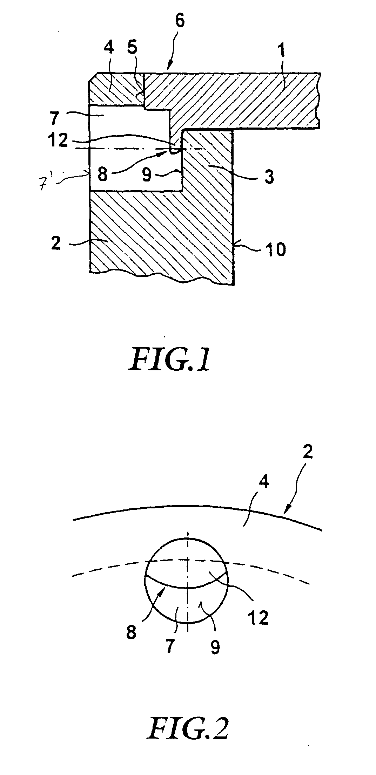

Der Deckel 2 weist - gemäß Figur 1 und Figur 3 - einen zylindrischen Einsteckbereich 3 auf, der im wesentlichen paßgenau in die Gehäuseöffnung des Gehäuseteils 1 eingesteckt ist, und einen umlaufenden Flansch 4 auf, der mit einer Stirnseite 5 eines Stirnseitenbereiches 6 des Gehäuseteils in Berührung steht. Entlang eines in Figur 4 eingetragenen Teilkreises mit dem Durchmesser D_{T} sind im Deckel 2 mehrere gleichmäßig verteilt angeordnete zylindrische Aussparungen 7 eingebracht. Der Durchmesser D_{A} der Aussparungen 7 ist so bemessen, daß die Summe der Durchmesser D_{A} + D_{T} größer ist als der Durchmesser D_{E} des Einsteckbereiches 3 bzw. des Innendurchmessers des Gehäuseteils 1. Hierdurch ist sichergestellt, daß bei der hier gewählten Tiefe der Aussparung 7, die länger ist als die Dicke des Flansches 4 die Aussparung 7 automatisch im Übergangsbereich von Einsteckbereich 3 und der Rückseite des Flansches 4 offen ist. Beim Einstecken des Deckels 2 in das Gehäuseteil 1 ist somit der spätere Verformungsbereich 8 des Stirnseitenbereichs 6 direkt innerhalb der Aussparung 7 angeordnet. Die Grundseite 9 der Aussparung 7 dient des weiteren als Hinterschneidung bezüglich der Vorderseite 10 des Einsteckbereichs 3.

Die Verbindung zwischen Deckel 2 und Gehäuseteil 1 erfolgt nunmehr durch Verformen des Verformungsbereiches 8 in der weiter unten beschriebenen Weise.

Im folgenden wird die Wirkungs- und Funktionsweise der vorliegenden Erfindung näher erläutert.

Zur Verbindung des Deckels 2 mit dem Gehäuseteil 1 wird der Deckel mit seinem Einsteckbereich 3 in das Gehäuseteil 1 eingesteckt, bis die Stirnseite 5 mit dem Flansch 4 zur Anlage kommt. Hierdurch ist automatisch der Verformungbereich 8 des Gehäuseteils 1 innerhalb der Aussparungen 7 angeordnet.

Anschließend wird in jede, von außen zugängliche Zugriffsöffnung der Aussparung 7 ein Preßstempel 11 eingefahren. Das Einfahren des Preßstempels 11 erfolgt achsparallel zur Achse des Deckels 2 und Gehäuseteils 1 bzw. in Achsrichtung der Aussparungen 7. Hierdurch wird der Verformungsbereich 8 aus der in Figur 3 befindlichen Ausgangsform in die in Figur 1 bzw. Figur 2 gezeigte Befestigungsform überführt. Dadurch entsteht eine Art Schließkopf 12, der mit der Grundseite 9 der Aussparung 7 in Eingriff kommt. Die Grundseite 9 dient dabei als Hinterschneidung, so daß der Deckel 2 zwischen der Stirnseite 5 des Gehäuseteils 1 und dem Schließkopf 12 verriegelt ist. Dieser Vorgang wird mit sämtlichen Aussparungen 7 wiederholt oder mit einem gemeinsamen Preßstempelelement ausgeführt.

Eine anschließende Verschließung der Aussparung 7 oder das Anordnen zusätzlicher Elemente mit Hilfe der Aussparung 7 kann nunmehr zum weiteren Schutze der Verbindungsstelle erfolgen. Diese Verbindungsmethode hat unter anderem den Vorteil, daß sie an einer relativ geschützten Stelle innerhalb des Deckelbereichs ausgeführt wird, und darüber hinaus lediglich eine Verformung des Verformungsbereichs 8 des Gehäuseteils 1 stattfindet.

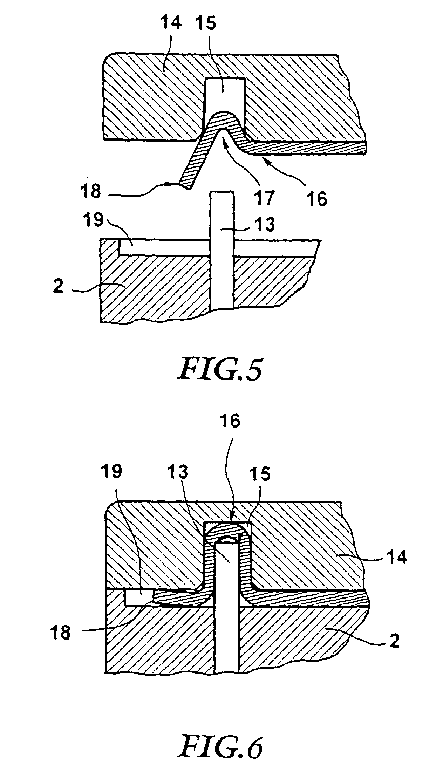

Bei einer Variante kann z.B. der Deckel 2 nach außen vorstehende Schneid- bzw- Quetschklingen 13 aufweisen, die als Kontakte zum Anschluß verschiedener Bauteile dienen. In Figur 5 ist ein Gehäuseanbauteil 14 dargestellt, das mit dem Deckel 2 z.B. über eine Rasteinrichtung verbunden werden kann. Das Gehäuseanbauteil 14 weist für jede Kontaktklinge 13 eine entsprechende Vertiefung 15 auf, die von einem Gegenkontakt 16 überspannt wird. Der Gegenkontakt 16 ist bei diesem Ausführungsbeispiel aus Draht- oder Bandmaterial hergestellt und mit einer Einformsicke 17 vorgeformt, so daß das freie Ende 18 nach vorne vorsteht. Die Einformsicke 17 erleichtert beim Zusammenfügen des Gehäuseanbauteils 14 und des Deckels 2 das Einschieben des Gegenkontaktes 16 durch die Kontaktklingen 13.

Wie anhand der Figur 6 zu erkennen ist, wird die Kontaktierung auf einfache Weise durch Zusammenfügen der beiden Bauteile erreicht und der Gegenkontakt 16 von der Kontaktklinge 13 in die Vertiefung 15 hineingedrückt und dort festgeklemmt. Das freie Ende 18 ist dann zwischen einer Aussparung 19 im Deckel 2 und dem Gehäuseanbauteil eingeklemmt und dort sicher positioniert. Diese Kontaktierungsart erfordert keine umständlichen und teuren Lötvorgänge und ist auch als bauteilfreundlich zu bezeichnen, da die Kontaktierung mit relativ geringem konstruktiven Aufwand erfolgt.

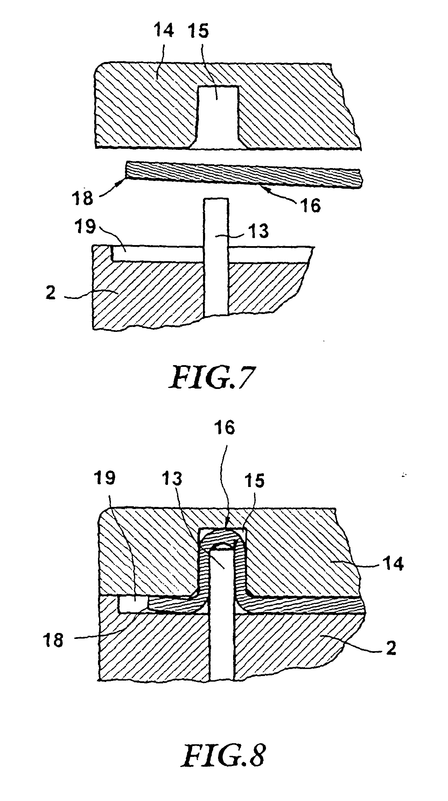

Die Ausführungsform gemäß der Figuren 7 und 8 unterscheidet sich von der vorangegangen Ausführungsform lediglich dadurch, daß die Gegenkontakte 16 auf einfache Weise durch abisolierte Litzenenden eines Kabels gebildet sind. Derartige Litzenenden formen sich ebenfalls sehr gut in die Vertiefungen 15 durch das Aufsetzen der Kontaktklingen 13 ein.

In der obigen Beschreibung enthaltene Angaben zu einer der offenbarten Ausführungsformen gelten, soweit sinnvoll und in sinnvoller Übertragung, jeweils auch für andere Ausführungsformen. Insbesondere liegt in diesen Angaben keine Einschränkung.

## Patentansprüche

1. Elektromotor mit einem rohrförmigen, sich entlang einer Achse erstreckenden Gehäuseteil (1) und mindestens einem an diesem befestigten Deckel (2), der mit einem Einsteckbereich (3) im Wesentlichen passgenau in das Gehäuseteil (1) eingesteckt ist und mit einem Flansch (4) an einer Stirnseite (5) des Gehäuseteils (1) anliegt und im Bereich des Übergangs von Einsteckbereich (3) und Flansch (4) mindestens eine Aussparung (7) aufweist, die über eine Zugriffsöffnung (7') von aussen zugänglich ist und eine Hinterschneidung (9) am Einsteckbereich (3) formt, hinter welchen ein Verformungsbereich (8) des Gehäuseteils (1) einformbar ist, wobei die Aussparungen (7) als zur Achse des Gehäuseteils (1) achsparallele Öffnungen im Flansch (4) ausgebildet sind, die sich in den Einsteckbereich (3) erstrecken und die an dessen Aussenumfang zum Aufnehmen des Stirnseitenbereichs (6) des Gehäuseteils (1) offen sind, wobei der vom Durchmesser des Einsteckbereichs (3) vorgegebene Querschnitt sämtliche der Befestigung des Deckels (2) dienenden Aussparungen (7) schneidet und der Verformungsbereich (8) des Gehäuseteils (6) innerhalb der Aussparungen (7) angeordnet ist,
**dadurch gekennzeichnet, dass**
der Verformungsbereich (8) durch achsparallel zur Achse des Gehäuseteils (1) erfolgendes Einführen eines Presstempels in die Zugriffsöffnung (7') in die Hinterschneidung (9) eingeformt ist und somit der Deckel (2) im Gehäuseteil (1) verriegelt ist.

2. Elektromotor nach Anspruch 1,
**dadurch gekennzeichnet, dass** mehrere Öffnungen (7') gleichmäßig verteilt auf demselben Teilkreis um die Deckelachse angeordnet sind.

3. Elektromotor nach Anspruch 2,
**dadurch gekennzeichnet, dass** der von den Öffnungen (7') aufgespannte Außendurchmesser (D_{T} + D_{A}) größer ist als der Durchmesser (D_{E}) des Einsteckbereichs (3) und der von den Öffnungen (7) aufgespannte Innendurchmesser (D_{T} - D_{A}) kleiner ist als der Durchmesser (D_{E}) des Einsteckbereichs (3).

4. Verfahren zum Herstellen eines Elektromotors nach einem der Ansprüche 1 bis 3, wobei
der Deckel (2) mit seinem Einsteckbereich (3) in das Gehäuseteil (1) eingeführt wird, bis sein Flansch (4) an der Stirnseite (5) des Gehäuseteils (1) anliegt und
ein Presstempel (11) achsparallel zur Richtung der Achse des Gehäuseteils (1) in die Aussparung (7) des Deckels (2) einfährt, wobei ein Verformen des Verformungsbereichs (8) des Gehäuseteils (1) in die Hinterschneidung (9) der Aussparung (7) erfolgt.

## Claims

1. An electric motor including a tubular housing member (1) extending along an axis and at least one cover (2) secured thereto, said cover (2) having an insertion area (3), which is inserted in the housing member (1) in an essentially tight-fitting manner, and a flange (4), which abuts on an end face (5) of the housing member (1), and including at least one opening (7) in the transition region of the insertion area (3) and the flange (4), said opening (7) being accessible from outside via an access opening (7') and forming an undercut portion (9) at the insertion area (3), a deformable portion (8) of the housing member (1) being adapted to be deformed into engagement with said undercut portion (9), the openings (7) being implemented as openings in the flange (4) which have an axis that is parallel to the axis of the housing member (1) and which extend into the insertion area (3) and are open at the outer circumference of said insertion area for receiving therein the end face area (6) of the housing member (1), the cross-section predetermined by the diameter of the insertion area (3) intersecting all the openings (7) which serve to fasten the cover (2) and the deformable portion (8) of the housing member (1) being arranged within said openings (7),
**characterized in that**
the deformable portion (8) is deformed into engagement with said undercut portion (9) by moving a ram into said access opening (7') axially parallel to the axis of said housing member (1), whereby the cover (2) is locked in position on said housing member (1).

2. An electric motor according to claim 1,
**characterized in**
**that** a plurality of openings (7') is uniformly distributed on the same reference circle around the axis of the cover (2).

3. An electric motor according to claim 2,
**characterized in**
**that** the external diameter (D_{T} + D_{A}) defined by the openings (7') is larger than the diameter (D_{E}) of the insertion area (3) and that the internal diameter (D_{T} - D_{A}) defined by the openings (7') is smaller than the diameter (D_{E}) of the insertion area (3).

4. A method of producing an electric motor according to one of the claims 1 to 3, wherein
the cover (2) is inserted into the housing member (1) with its insertion area (3) until its flange (4) abuts on the end face (5) of said housing member (1), and
a ram (11) is introduced into the opening (7) of the cover (2) axially parallel to the direction of the axis of the housing member (1), whereby the deformable portion (8) of the housing member (1) is deformed into engagement with the undercut portion (9) of said opening (7).

## Revendications

1. Moteur électrique avec une pièce de carter (1) tubulaire s'étendant le long d'un axe et au moins un couvercle (2) fixé sur celle-ci, lequel est fiché par une zone d'embrochement (3) dans la pièce de carter (1) essentiellement de manière précisément ajustée, vient en butée par une bride (4) contre une face frontale (5) de la pièce de carter (1) et présente au niveau de la transition entre la zone d'embrochement (3) et la bride (4) un évidement (7) au moins, lequel est accessible de l'extérieur par une ouverture d'accès (7') et forme une contre-dépouille (9) sur la zone d'embrochement (3) derrière laquelle une zone de déformation (8) de la pièce de carter (1) est déformable, les évidements (7) étant formés comme des ouvertures dans la bride (4) axialement parallèles à l'axe de la pièce de carter (1), s'étendant dans la zone d'embrochement (3) et ouvertes sur la circonférence extérieure de celle-ci pour le logement de la zone de face frontale (6) de la pièce de carter (1), tous les évidements (7) servant à la fixation du couvercle (2) étant intersectés par la section prescrite par le diamètre de la zone d'embrochement (3), et la zone de déformation (8) de la pièce de carter (1) étant disposée à l'intérieur des évidements (7),
**caractérisé en ce que**
la zone de déformation (8) est déformée dans la contre-dépouille (9) par engagement axialement parallèle à l'axe de la pièce de carter (1) d'un poinçon de presse dans l'ouverture d'accès (7'), le couvercle (2) étant ainsi verrouillé dans la pièce de carter (1).

2. Moteur électrique selon la revendication 1,
**caractérisé en ce que** plusieurs ouvertures (7') sont disposées en étant régulièrement distribuées sur le même cercle primitif autour de l'axe de couvercle.

3. Moteur électrique selon la revendication 2,
**caractérisé en ce que** le diamètre extérieur (D_{T} + D_{A}) entre les ouvertures (7') est supérieur au diamètre (D_{E}) de la zone d'embrochement (3) et **en ce que** le diamètre intérieur (D_{T} - D_{A}) entre les ouvertures (7) est inférieur au diamètre (DE) de la zone d'embrochement (3).

4. Procédé pour la fabrication d'un moteur électrique selon l'une des revendications 1 à 3, dans lequel
le couvercle (2) est inséré par sa zone d'embrochement (3) dans la pièce de carter (1) jusqu'à ce que sa bride (4) bute contre la face frontale (5) de la pièce de carter (1), et
un poinçon de presse (11) est engagé dans l'évidement (7) du couvercle (2), dans un sens axialement parallèle au sens de l'axe de la pièce de carter (1), une déformation de la zone de déformation (8) de la pièce de carter (1) étant obtenue dans la contre-dépouille (9) de l'évidement (7).
